# EUROPEAN PATENT APPLICATION

(11) **EP 4 790 738 A1**
(43) Date of publication of application: **12.08.2026**
(21) Application number: 26157892.6
(22) Date of filing: 11.02.2026
(51) Int. Cl.: H01H 50/58, H01H 50/54, H01H 50/04, H01H 1/20, H01H 9/20, H01H 39/00, H01H 50/32, H01H 50/34, H01H 50/64

(54) **PROTECTION DEVICE, PROTECTION CIRCUIT AND BATTERY SYSTEM**

(30) Priority: 11.02.2025 CN 202510151717
(71) Applicant: Xiamen Hongfa Electric Power Controls Co., Ltd., Xiamen, Fujian 3610274 (CN)
(72) Inventor: HONG, Yaosheng, Xiamen, 361027 (CN); CHEN, Songsheng, Xiamen, 361027 (CN); HUANG, Youquan, Xiamen, 361027 (CN)
(74) Representative: De Vries & Metman

(57) **Abstract**

The present disclosure relates to the technical field of electronic control devices, in particular to a protection device, a protection circuit and a battery system. The protection device includes a stationary contact member (100), a fixed assembly (200), a movable assembly (300) and an actuator (400), wherein: the movable assembly (300) is movable relative to the fixed assembly (200), and the movable assembly (300) includes a movable contact member (310); the movable assembly (300) has an initial state and an actuated state, when the movable assembly (300) is in the initial state, no conductive connection between the movable contact member (310) and the stationary contact member (100) exists; when the movable assembly (300) is in the actuated state, a conductive connection between the movable contact member (310) and the stationary contact member (100) exists; the actuator (400) is fixed to the fixed assembly (200), and the actuator (400) can be triggered to switch the movable assembly (300) from the initial state to the actuated state. The protection device can meet the requirements of short-circuit protection and discharge.

## Description

### TECHNICAL FIELD

The present disclosure relates to the technical field of electronic control device, in particular to a protection device, a protection circuit and a battery system.

### BACKGROUND

With the demands for high cruising range and high reliability performance of new energy vehicles, higher requirements are put forward for the safety and reliability of battery systems. The system upgrade requires that a short-circuit circuit should be formed and the energy of the circuit should be protected when a short-circuit occurs.

When a short-circuit occurs in a battery system or a main circuit in the prior art, there are two relatively common protection methods. Taking a short-circuit of the main circuit as an example, one method is to arrange a fuse in the main circuit, which will blow when a short-circuit occurs; the other method is to arrange a relay/contactor in the main circuit. It should be noted that if a fuse is adopted, excessive residual current will lead to failure in ensuring safety, that is, the use of a fuse cannot meet the discharge requirements and cannot meet the short-circuit closing function at the same time; if a relay/contactor is adopted, if the relay/contactor is adhesion or bounces off during a short-circuit, it cannot meet the requirements of short-circuit protection and discharge at the same time.

Therefore, there is an urgent need to provide a protection structure that can meet the requirements of short-circuit protection and discharge simultaneously.

### SUMMARY

The embodiments of the present disclosure provide a protection device, a protection circuit and a battery system, and the protection device can meet the requirements of short-circuit protection and discharge.

The embodiments of the present disclosure provide a protection device, including: a stationary contact member, a fixed assembly, a movable assembly and an actuator,
wherein the movable assembly is movable relative to the fixed assembly, and the movable assembly includes a movable contact member; the movable assembly has an initial state and an actuated state, when the movable assembly is in the initial state, no conductive connection between the movable contact member and the stationary contact member exists; when the movable assembly is in the actuated state, a conductive connection between the movable contact member and the stationary contact member exists;
the actuator is fixed to the fixed assembly, and the actuator is capable of being triggered to switch the movable assembly from the initial state to the actuated state.

According to some implementations of the present disclosure, the movable assembly and the fixed assembly cooperate to form a locking structure, and the locking structure is configured to lock a position of the movable assembly in the actuated state.

According to some implementations of the present disclosure, the fixed assembly is provided with a first through-hole, and the movable assembly penetrates the fixed assembly through the first through-hole; when the movable assembly is in the actuated state, at least a portion of the movable assembly is engaged within the first through-hole to lock the position of the movable assembly in the actuated state; the movable assembly and the first through-hole cooperate to form the locking structure.

According to some implementations of the present disclosure, the fixed assembly includes a support plate, and the support plate is provided with the first through-hole;
the movable assembly includes a movable rod capable of moving relative to the fixed assembly along a first direction, the movable rod includes a first section and a second section, along the first direction, the first section is located on a side of the second section facing the stationary contact member; in a plane perpendicular to the first direction, a cross-sectional dimension of the first section is smaller than a dimension of the first through-hole, and a cross-sectional dimension of the second section is larger than a dimension of the first section; when the movable assembly is in the initial state, at least a portion of the first section is placed within the first through-hole, and the second section is located outside the first through-hole; when the movable assembly is in the actuated state, at least a portion of the second section is engaged within the first through-hole to lock the position of the movable assembly in the actuated state.

According to some implementations of the present disclosure, the movable rod further includes a third section, and the first section is transitionally connected with the second section through the third section.

According to some implementations of the present disclosure, the support plate includes a main body and a limiting protrusion, the first through-hole is disposed on the main body, and the limiting protrusion protrudes from an inner wall surface of the first through-hole;
a groove is disposed on a peripheral side surface of the first section, when the movable assembly is in the initial state, at least a portion of the limiting protrusion is located within the groove; when the movable assembly is in the actuated state, the limiting protrusion detaches from the main body.

According to some implementations of the present disclosure, the movable rod further includes a fourth section, along the first direction, the fourth section is located on a side of the second section facing away from the stationary contact member; in a plane perpendicular to the first direction, a cross-sectional dimension of the fourth section is larger than a cross-sectional dimension of the second section; the fourth section and the second section form a stepped structure, and the stepped structure has a stepped surface; when the movable assembly is in the actuated state, the second section is completely placed within the first through-hole, and the stepped surface abuts against a side surface of the main body of the support plate facing away from the stationary contact member.

According to some implementations of the present disclosure, the fixed assembly includes a support plate and an engaging member, the support plate is provided with a first through-hole; the engaging member is fixed to the support plate and located outside the first through-hole, when the movable assembly is in the actuated state, the engaging member is engaged with the movable assembly to lock the position of the movable assembly in the actuated state; the engaging member and the movable assembly cooperate to form a locking structure.

According to some implementations of the present disclosure, the fixed assembly includes a support plate and an engaging member, the support plate is provided with a second through-hole; the engaging member is fixed to the support plate and located outside the second through-hole, when the movable assembly is in the actuated state, the engaging member is engaged with the movable assembly to lock the position of the movable assembly in the actuated state; the engaging member and the movable assembly cooperate to form the locking structure.

According to some implementations of the present disclosure, the engaging member is fixed to a side of the support plate facing the stationary contact member; the engaging member is provided with a third through-hole, an aperture of the third through-hole is smaller than that of the second through-hole, and a vertical projection of the third through-hole on the support plate is located within the second through-hole; the movable assembly penetrates the support plate through the second through-hole and the third through-hole;
the movable assembly includes a movable rod capable of moving relative to the fixed assembly along a first direction, the movable rod includes a fifth section, a groove is disposed on a peripheral side surface of the fifth section, when the movable assembly is in the initial state, the engaging member is located outside the groove; when the movable assembly is in the actuated state, at least a portion of the engaging member is located within the groove.

According to some implementations of the present disclosure, the engaging member is welded to a surface of the support plate.

According to some implementations of the present disclosure, the engaging member is a metal sheet.

According to some implementations of the present disclosure, the movable rod further includes a sixth section, along the first direction, the sixth section is located on a side of the fifth section facing away from the stationary contact member; in a plane perpendicular to the first direction, a cross-sectional dimension of the sixth section is larger than a cross-sectional dimension of the fifth section; the sixth section and the fifth section form a stepped structure, and the stepped structure has a stepped surface, when the movable assembly is in the actuated state, the stepped surface abuts against a side surface of the main body of the support plate facing away from the stationary contact member.

According to some implementations of the present disclosure, the movable rod is a movable iron core; the movable assembly further includes a push rod, the push rod follows the movable rod, and the movable contact member follows the push rod;
or, the movable rod is a movable iron core, and the movable contact member follows the movable rod.

According to some implementations of the present disclosure, a number of the stationary contact members is two, and two ends of the movable contact member is capable of being contacted with and disengaged from the two stationary contact members respectively.

According to some implementations of the present disclosure, the fixed assembly further includes an insulating cover, the insulating cover is connected with the support plate to form an accommodating cavity, and the stationary contact member and the movable contact member are contacted with each other within the accommodating cavity.

According to some implementations of the present disclosure, the movable contact member is located on a side of the stationary contact member, and the actuator is located on a side of the movable assembly facing away from the stationary contact member.

According to some implementations of the present disclosure, the actuator includes an igniter.

According to some implementations of the present disclosure, a filler is provided in the igniter, and the filler is capable of being ignited to generate gas; the igniter pushes the movable assembly by means of the gas;
or, a filler and a piston rod are provided in the igniter, and the filler is capable of being ignited to generate gas; the piston rod is located in a diffusion space of the gas and can be pushed by the gas; the igniter pushes the movable assembly by means of the piston rod.

According to some implementations of the present disclosure, the protection device further includes a temperature sensor, and the temperature sensor is located adjacent to the stationary contact member for monitoring the temperature of the stationary contact member.

According to some implementations of the present disclosure, the protection device further includes a micro switch, the micro switch includes an auxiliary movable contact member and an auxiliary stationary contact member, the auxiliary movable contact member follows the movable assembly, and the auxiliary stationary contact member is fixed relative to the fixed assembly;
when the movable assembly is in the initial state, a conductive connection between the auxiliary movable contact member and the auxiliary stationary contact member exists; when the movable assembly is in the actuated state, no conductive connection between the auxiliary movable contact member and the auxiliary stationary contact member exists;
or, when the movable assembly is in the initial state, no conductive connection between the auxiliary movable contact member and the auxiliary stationary contact member exists; when the movable assembly is in the actuated state, a conductive connection between the auxiliary movable contact member and the auxiliary stationary contact member exists.

According to some implementations of the present disclosure, the protection device further includes an elastic assembly, and the movable rod pushes the movable contact member to act in the first direction by means of the elastic assembly.

According to some implementations of the present disclosure, the elastic assembly includes a spring or a leaf spring.

The present disclosure further provides a protection circuit, including the protection device according to any one of the above technical solutions.

The present disclosure further provides a battery system, including the protection device according to any one of the above technical solutions.

The present disclosure further provides a battery system, including the protection circuit according to any one of the above technical solutions.

According to some implementations of the present disclosure, the battery system further includes a main circuit, the protection circuit is connected in parallel with the main circuit and is capable of allowing residual current remaining in the main circuit in an interrupted state to pass through.

One embodiment of the above present disclosure has following advantages or beneficial effects:
1. The actuator in the protection device provided by the present disclosure may be triggered when the short-circuit occurs in the main circuit or the battery system, and the actuator actuates the movable assembly to make a conductive connection between the movable contact member and the stationary contact member, so that the protection circuit is conducted. Specifically, the protection circuit may be activated as required to short-circuit the main circuit, so that the residual current in the main circuit is discharged through the protection circuit, so as to protect the main circuit and improve the safety performance of the battery system.
2. The locking structure in the protection device provided by the present disclosure fixes the position of the movable assembly in the actuated state, so that the stationary contact member and the movable contact member in the movable assembly may maintain continuous and effective contact, so as to resist the short-circuit electric repulsive force generated between the movable contact member and the stationary contact member when the movable contact member is in contact with the stationary contact member, and keep the movable contact member and the stationary contact member closed continuously to achieve the circuit discharge function.
3. After the movable assembly in the protection device provided by the present disclosure is actuated by the actuator, at least a portion of the movable assembly is placed into the first through-hole and engaged with the inner wall of the first through-hole to lock the position of the movable assembly in the actuated state. Furthermore, when the position of the movable assembly is locked, the stationary contact member and the movable contact member in the movable assembly may maintain continuous and effective contact, so as to resist the short-circuit electric repulsive force generated between the movable contact member and the stationary contact member when the movable contact member is in contact with the stationary contact member, and keep the movable contact member and the stationary contact member closed continuously to achieve the circuit discharge function.
4. In the protection device provided by the present disclosure, at least a portion of the engaging member fixed outside the second through-hole of the support plate is used for engaging with the movable assembly to lock the position of the movable rod in the actuated state. When the position of the movable assembly is locked by the engaging member, the stationary contact member and the movable contact member in the movable assembly may maintain continuous and effective contact, so as to resist the short-circuit electric repulsive force generated between the movable contact member and the stationary contact member when they are in contact, and keep the movable contact member and the stationary contact member closed continuously to achieve the circuit discharge function.
5. The protection device provided by the present disclosure further includes a temperature sensor, which is located adjacent to the stationary contact member and used for monitoring the temperature of the stationary contact member. The temperature sensor is connected with the battery system to realize real-time monitoring of the temperature rise of the protection device and ensure the safety performance of the protection device.
6. The protection device provided by the present disclosure further includes a micro switch, which realizes the detection of the contact and separation of the movable contact member and the stationary contact member, performs logic monitoring on the action of the protection device, and ensures the action reliability of the protection device.

### BRIEF DESCRIPTION OF THE DRAWINGS

FIG. 1 is a schematic perspective view of a protection device provided by an embodiment of the present disclosure;
FIG. 2 is a cross-sectional view at a plane M of a first protection device provided by an embodiment of the present disclosure in an initial state;
FIG. 3 is a cross-sectional view at a plane M of the first protection device provided by an embodiment of the present disclosure in an actuated state;
FIG. 4 is an enlarged schematic view of part A in FIG. 2;
FIG. 5 is an enlarged schematic view of part B in FIG. 3;
FIG. 6 is a cross-sectional view of a second protection device provided by an embodiment of the present disclosure in an actuated state;
FIG. 7 is an enlarged schematic view of part C in FIG. 6;
FIG. 8 is a cross-sectional view of a third protection device provided by an embodiment of the present disclosure in an initial state;
FIG. 9 is an enlarged schematic view of part D in FIG. 8;
FIG. 10 is a cross-sectional view of the third protection device provided by an embodiment of the present disclosure in an actuated state;
FIG. 11 is an enlarged schematic view of part E in FIG. 10;
FIG. 12 is a schematic view of a partial structure of a fixed assembly in the third protection device provided by an embodiment of the present disclosure;
FIG. 13 is a schematic structural view of an actuator in the protection device provided by an embodiment of the present disclosure.

### List of the reference numerals:

100: stationary contact member; 200: fixed assembly; 210: support plate; 211: main body; 212: limiting protrusion; 213: first through-hole; 214: second through-hole; 220: engaging member; 221: third through-hole; 230: insulating cover; 300: movable assembly; 310: movable contact member; 320: push rod; 330: movable iron core; 331: first section; 3311: groove; 332: second section; 333: third section; 334: fourth section; 335: fifth section; 336: sixth section; 400: actuator; 500: micro switch; 510: auxiliary movable contact member; 520: auxiliary stationary contact member; 600: temperature sensor

### DETAILED DESCRIPTION

Example implementations will now be described more fully with reference to the accompanying drawings. However, example implementations may be embodied in various forms and should not be construed as limiting the implementations set forth herein; instead, these implementations are provided so that the present disclosure will be thorough and complete, and will fully convey the concept of example implementations to those skilled in the art. The same reference numerals in the drawings denote the same or similar structures, and thus their detailed descriptions will be omitted.

When a short circuit occurs in a battery system or a main circuit, a protective component such as a fuse installed in the main circuit or the battery system will melt, thereby disconnecting the battery system or the main circuit. Taking the main circuit as an example, after the main circuit is powered off, residual current may exist inside the main circuit, and if the residual current is too large, it will affect the safety performance of the battery system.

With the demands for high cruising range and high reliability of new energy vehicles, higher requirements are imposed on the safety and reliability of battery systems. System upgrades require that a short-circuit circuit should be formed and the energy of the circuit should be discharged when a short circuit occurs in the main circuit. The embodiments of the present disclosure provide a battery system, which includes a main circuit and a discharge circuit. The discharge circuit is connected in parallel with the main circuit and can allow the remaining residual current in the main circuit in an interrupted state to pass through.

It should be noted that the battery system provided by the embodiments of the present disclosure can activate the protection circuit as required to short-circuit the main circuit by connecting the protection circuits in parallel on both sides of the main circuit, so that the residual current in the main circuit is discharged through the protection circuit, thereby protecting the main circuit and improving the safety performance of the battery system.

The protection circuits are connected in parallel on both sides of the main circuit and controlled by a control module in the battery system. When the short circuit occurs in the battery system or the main circuit, the control module may control the protection circuit to turn on. It should be understood that a structural component for monitoring the circuit state of the main circuit or the entire battery system may be arranged within the battery system, so as to feed back a short-circuit signal to the control module through the structural component, thereby enabling the control module to effectively control the protection circuit.

It should be noted that the protection circuits in the above embodiments are also protected by the embodiments of the present disclosure. The protection circuit provided by the embodiment of the present disclosure includes a protection device, and the protection device may be the protection device in any of the following solutions to meet the requirements of short-circuit protection and discharge and improve the safety performance of the battery system. In addition, the battery system provided by the embodiment of the present disclosure may further include a protection device, and the protection device may be the protection device in any of the following solutions to meet the requirements of short-circuit protection and discharge and improve the safety performance of the battery system.

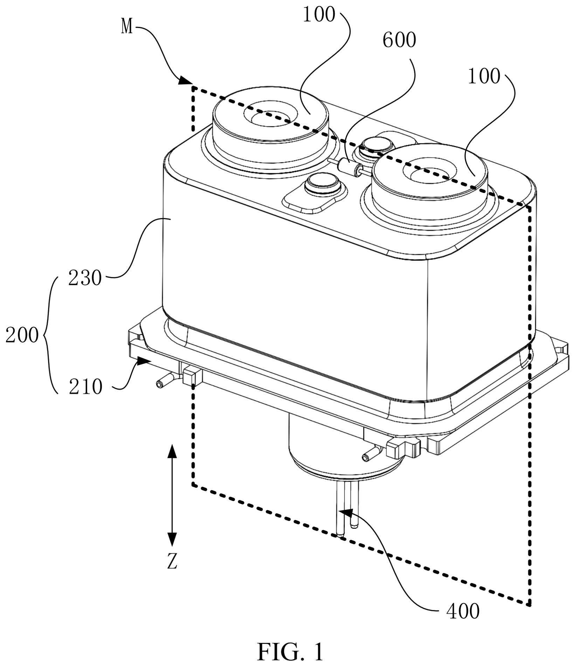

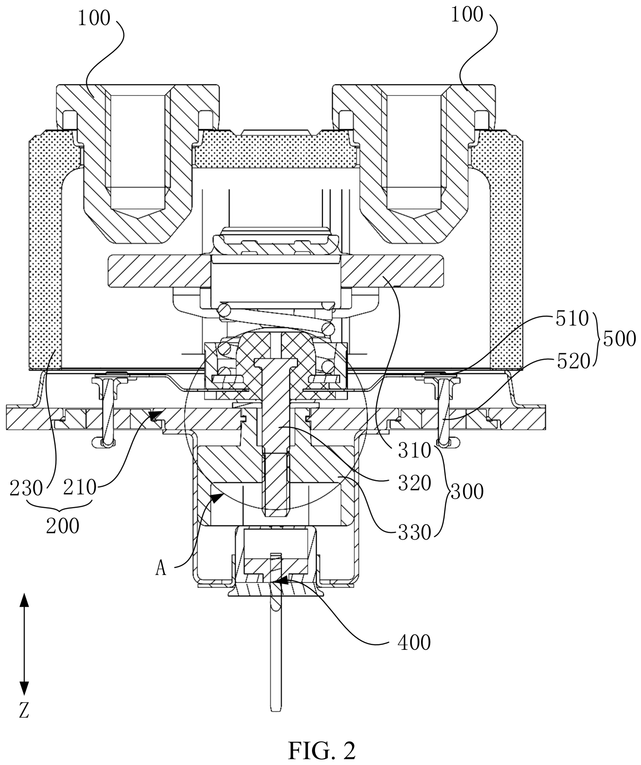

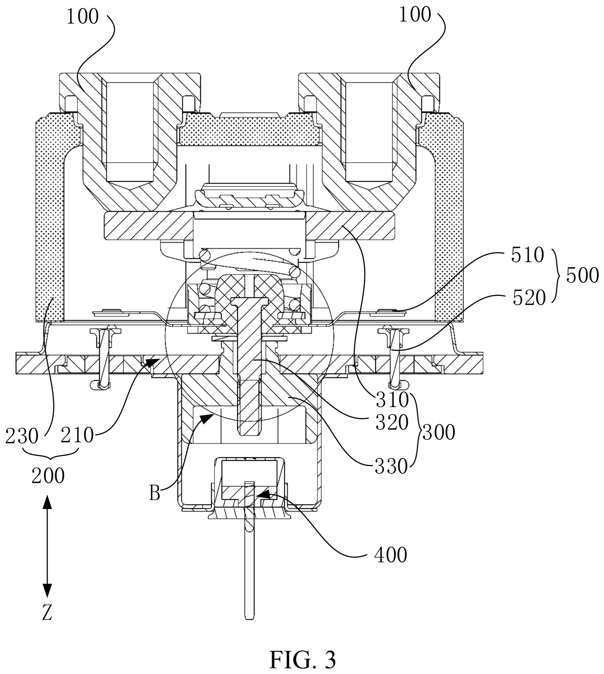

An embodiment of the present disclosure provides a protection device. Referring to the structures shown in FIGS. 2 and 3 in conjunction with FIG. 1. The protection device includes a stationary contact member 100, a fixed assembly 200, a movable assembly 300 and an actuator 400. The movable assembly 300 is movable relative to the fixed assembly 200. The movable assembly 300 includes a movable contact member 310. The movable assembly 300 has an initial state and an actuated state, when the movable assembly 300 is in the initial state, no conductive connection between the movable contact member 310 and the stationary contact member 100 exists; when the movable assembly 300 is in the actuated state, a conductive connection between the movable contact member 310 and the stationary contact member 100 exists; the actuator 400 is fixed to the fixed assembly 200, and the actuator 400 can be triggered to switch the movable assembly 300 from the initial state to the actuated state.

The stationary contact member 100 may be selected with different shapes and contact structures. The movable contact member 310 may adopt a movable contact piece, or a structure combining the movable contact piece and a contact. The movable contact member 310 and the stationary contact member 100 may be conducted through contacting, or may be conducted through other structural components, which will not be repeated in detail here. When the movable contact member 310 and the stationary contact member 100 are conducted through contacting, "no conductive connection between the movable contact member 310 and the stationary contact member 100 exists" means "the movable contact member 310 is not in contact with the stationary contact member 100", which can be understood as a gap therebetween is greater than 0.

There are various possible arrangements of the movable contact member 310 and the stationary contact member 100. In one implementation, the movable contact member 310 is located on a side of the stationary contact member 100. For example, the arrangement position of the movable contact member 310 and the stationary contact member 100 defines a first direction, the movable assembly 300 may be movable along the first direction relative to the fixed assembly 200, and the first direction is shown as a direction Z in the accompanying drawings.

Referring to the structure shown in FIG. 2 again, the number of stationary contact members 100 in the protection device provided by the embodiment of the present disclosure is two, and the two stationary contact members 100 are in contact with two ends of the movable contact member 310, i.e., the movable contact member sheet. Certainly, the movable contact member 310 and the stationary contact member 100 within the protection device may also adopt other contacting forms, such as the contacting form in a hinged-armature relay.

It should be understood, with continued reference to FIGS. 2 and 3, that when the movable assembly 300 is in the initial state, the movable contact member 310 is not in contact with the stationary contact member 100, and the protection circuit is in an interrupted state; when the movable assembly 300 is in the actuated state, the movable contact member 310 is in contact with the stationary contact member 100, i.e., they are closed to form a closed circuit, and the protection circuit is in a conducting state. In summary, when a short circuit occurs in the battery system or the main circuit, the control module triggers the actuator 400, and the actuator 400 pushes the movable assembly 300 in the initial state to move upward until the movable contact member 310 contacts the stationary contact member 100, and the movable assembly 300 is switched from the initial state to the actuated state.

It should be noted that the actuator 400 in the protection device provided by the embodiment of the present disclosure may be triggered when the short circuit occurs in the main circuit or the battery system, and the actuator 400 actuates the movable assembly 300 to make the conductive connection between the movable contact member 310 and the stationary contact member 100, so that the protection circuit is conducted. Specifically, the protection circuit may be activated as required to short-circuit the main circuit, so that the residual current in the main circuit is discharged through the protection circuit, thereby protecting the main circuit and improving the safety performance of the battery system.

In order to improve the stability of the protection circuit and ensure the stable operation of the protection circuit. In one embodiment, the movable assembly 300 and the fixed assembly 200 cooperate to form a locking structure, which is configured to lock the position of the movable assembly 300 in the actuated state. As an example, the locking structure is configured to lock the position of the movable assembly 300 in the actuated state along the first direction. It should be understood that relevant structural components used to lock the positions of the movable assembly 300 and the fixed assembly 200 may be classified into the fixed assembly 200 and/or the movable assembly 300 respectively.

It should be noted that the locking structure fixes the position of the movable assembly 300 in the actuated state, so that the stationary contact member 100 and the movable contact member 310 in the movable assembly 300 can maintain continuous and effective contact, so as to resist the short-circuit electric repulsive force generated between the movable contact member 310 and the stationary contact member 100 when they are in contact, and keep the movable contact member 310 and the stationary contact member 100 closed continuously to achieve the circuit discharge function.

Accordingly, when the protection device provided by the embodiments of the present disclosure is applied to a protection circuit, the residual current in the main circuit may be continuously and effectively discharged through the protection circuit, so as to improve the protection effect on the main circuit and further improve the safety performance of the battery system.

The locking structure in the embodiment of the present disclosure may be a triggered jamming structure or a self-locking structure.

In one embodiment, referring to the structures shown in FIGS. 2 and 3, the fixed assembly 200 is provided with a first through-hole 213, and the movable assembly 300 penetrates the fixed assembly 200 through the first through-hole 213; when the movable assembly 300 is in the actuated state, at least a portion of the movable assembly 300 is engaged within the first through-hole 213 to lock the position of the movable assembly 300 in the actuated state; the movable assembly 300 and the first through-hole 213 cooperate to form the locking structure. The locking structure in this embodiment may be understood as a triggered jamming structure.

As an example of that the locking structure is configured to lock the position of the movable assembly 300 in the actuated state along the first direction, after the movable assembly 300 is actuated by the actuator 400, at least a portion of the movable assembly 300 is placed into the first through-hole 213 and engaged with the inner wall of the first through-hole 213, to lock the position of the movable assembly 300 in the actuated state along the first direction. Furthermore, when the position of the movable assembly 300 along the first direction is locked, the stationary contact member 100 and the movable contact member 310 in the movable assembly 300 can maintain continuous and effective contact, so as to resist the short-circuit electric repulsive force generated between the movable contact member 310 and the stationary contact member 100 when they are in contact, and keep the movable contact member 310 and the stationary contact member 100 closed continuously to achieve the circuit discharge function.

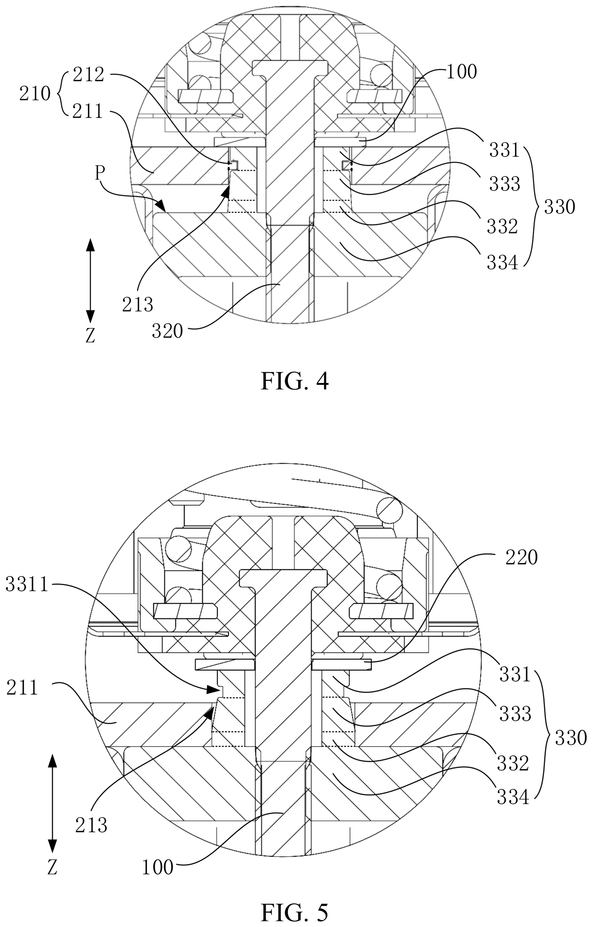

In one specific embodiment, referring to the structures shown in FIGS. 2 and 3, the fixed assembly 200 includes a support plate 210, and the support plate 210 is provided with a first through-hole 213. Referring to the structures shown in FIGS. 4 and 5 in conjunction with FIGS. 2 to 3, the movable assembly 300 includes a movable rod capable of moving relative to the fixed assembly 200 along the first direction, the movable rod includes a first section 331 and a second section 332 (schematically separated by a dashed line), along the first direction, the first section 331 is located on a side of the second section 332 facing the stationary contact member 100; in a plane perpendicular to the first direction, a cross-sectional dimension of the first section 331 is smaller than a dimension of the first through-hole 213, and a cross-sectional dimension of the second section 332 is larger than a cross-sectional dimension of the first section 331; when the movable assembly 300 is in the initial state, at least a portion of the first section 331 is placed in the first through-hole 213, and the second section 332 is located outside the first through-hole 213; when the movable assembly 300 is in the actuated state, at least a portion of the second section 332 is engaged within the first through-hole 213 to lock the position of the movable assembly 300 in the actuated state in the first direction.

It should be noted that the second section 332 and the first through-hole 213 cooperate to form a locking structure. Specifically, at least a portion of the second section 332 may be placed into the first through-hole 213 after the movable assembly 300 is actuated by the actuator 400 and engaged with the inner wall of the first through-hole 213, so as to lock the position of the movable rod in the actuated state along the first direction.

In one embodiment, continue to refer to the structures shown in FIGS. 4 and 5 in conjunction with FIGS. 2 to 3, the movable rod further includes a third section 333, and the first section 331 is transitionally connected with the second section 332 through the third section 333. The surface of the third section 333 forms a guiding inclined surface in order to facilitate placing second section 332 into the first through-hole 213 and engage the second section 332 with the first through-hole 213, to reduce the actuation difficulty of the actuator 400, and enable the protection circuit to function timely and effectively.

In one embodiment, continue to refer to the structures shown in FIGS. 4 and 5 in conjunction with FIGS. 2 to 3, the support plate 210 includes a main body 211 and a limiting protrusion 212 (schematically separated by a dashed line), the first through-hole 213 is disposed on the main body 211, and the limiting protrusion 212 protrudes from the inner wall surface of the first through-hole 213. A groove 3311 is disposed on a peripheral side surface of the first section 331. When the movable assembly 300 is in the initial state, at least a portion of the limiting protrusion 212 is located in the groove 3311; when the movable assembly 300 is in the actuated state, the limiting protrusion 212 detaches from the main body 211.

It should be noted that the limiting protrusion 212 disposed on the support plate 210 and the groove 3311 disposed on the first section 331 cooperate, wherein the groove 3311 can limit the position of the movable rod along the first direction in the initial state, prevent the movable rod from moving without being actuated by the actuator 400, avoid the erroneous closing of the protection circuit, and improve the structural performance of the entire protection device.

It should be noted that when the actuator 400 actuates the movable assembly 300, the limiting protrusion 212 may be impacted by the movable rod and detached from the main body 211 of the support plate 210, so that the second section 332 may enter into the first through-hole 213 and engage therewith.

The groove 3311 may be disposed around the peripheral side surface of the first section 331, or may be located only on a partial surface of the first section 331. For example, only one groove 3311 surrounding a partial surface of the first section 331 may be disposed on the surface of the first section 331. Certainly, the number of the grooves 3311 on the surface of the first section 331 is not limited to one, but may be set to other numbers as required. For example, two grooves 3311 symmetrically arranged are disposed on the surface of the first section 331; alternatively, three grooves 3311 are disposed on the surface of the first section 331, and the three grooves 3311 are evenly spaced along the peripheral side surface of the first section 331.

It can be understood that when several grooves 3311 are evenly distributed on the surface of the first section 331, the stability of the movable rod in the first through-hole 213 in the initial state can be improved, and an axis of the movable rod is prevented from inclining at a large angle relative to a center line of the first through-hole 213, so that the movable rod can move smoothly along the first direction when actuated by the actuator 400.

In addition, a dimension of the limiting protrusion 212 protruding from the main body 211 can not be too large or too small. If the dimension of the limiting protrusion 212 protruding from the main body 211 is too large, it will increase the difficulty for the movable rod to break off the limiting protrusion 212 from the main body 211, which will further prevent the actuator 400 from switching the movable assembly 300 to the actuated state, thereby affecting the structural performance of the protection device. If the dimension of the limiting protrusion 212 protruding from the main body 211 is too small, the limiting protrusion 212 cannot be effectively placed into the groove 3311, which will affect the stability of the movable rod along the first direction, and may further lead to the erroneous closing of the protection circuit, failing to ensure the structural performance of the entire protection device.

In one embodiment, continue to refer to the structures shown in FIGS. 4 and 5 in conjunction with FIGS. 2 to 3, the movable rod further includes a fourth section 334. Along the first direction, the fourth section 334 is located on a side of the second section 332 facing away from the stationary contact member 100; in a plane perpendicular to the first direction, the cross-sectional dimension of the fourth section 334 is larger than the cross-sectional dimension of the second section 332. The fourth section 334 and the second section 332 form a stepped structure, and the stepped structure has a stepped surface; when the movable assembly 300 is in the actuated state, the second section 332 is completely placed into the first through-hole 213, and the stepped surface abuts against the side surface of the main body 211 of the support plate 210 facing away from the stationary contact member 100.

It should be noted that the stepped surface on the surface of the fourth section 334 can limit the maximum moving distance of the movable rod along the first direction, prevent the movable rod from excessive movement when switching from the initial state to the actuated state and avoid damaging the stationary contact member 100, thereby improving the structural performance of the protection device.

When the movable assembly 300 is arranged, the movable rod may adopt various structural forms, such as at least one of the following.

In a specific embodiment, continue to refer to the structures shown in FIGS. 4 and 5 in conjunction with FIGS. 2 to 3, the movable rod is a movable iron core 330; the movable assembly 300 further includes a push rod 320, the push rod 320 follows the movable rod, and the movable contact member 310 follows the push rod 320.

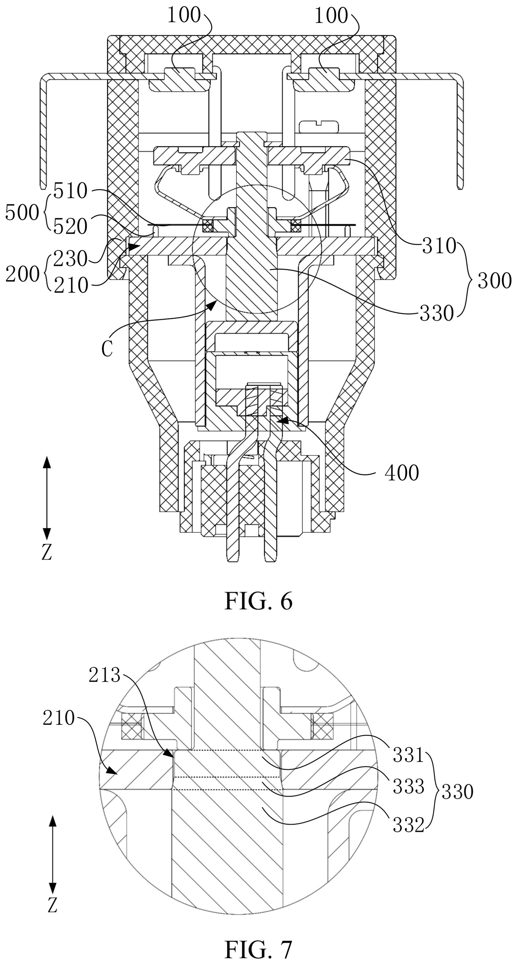

In another specific embodiment, referring to the structures shown in FIGS. 6 and 7, the movable rod is a movable iron core 330, and the movable contact member 310 follows the movable rod. It should be noted that the movable iron core 330 in the embodiment of the present disclosure is equivalent to integrating the movable iron core 330 and the push rod 320 in FIGS. 2 and 3 into an integrated structure to be triggered by the actuator 400. It should be noted that the structural arrangement in this specific embodiment reduces the number of structural components, simplifies the structure of the protection device, and lowers the assembly difficulty.

It can be understood that, as shown in FIGS. 6 and 7, in this specific embodiment, the movable rod including a first section 331, a second section 332 and a third section 333 is illustrated. Certainly, the movable rod may further include a fourth section 334, which will not be described in detail.

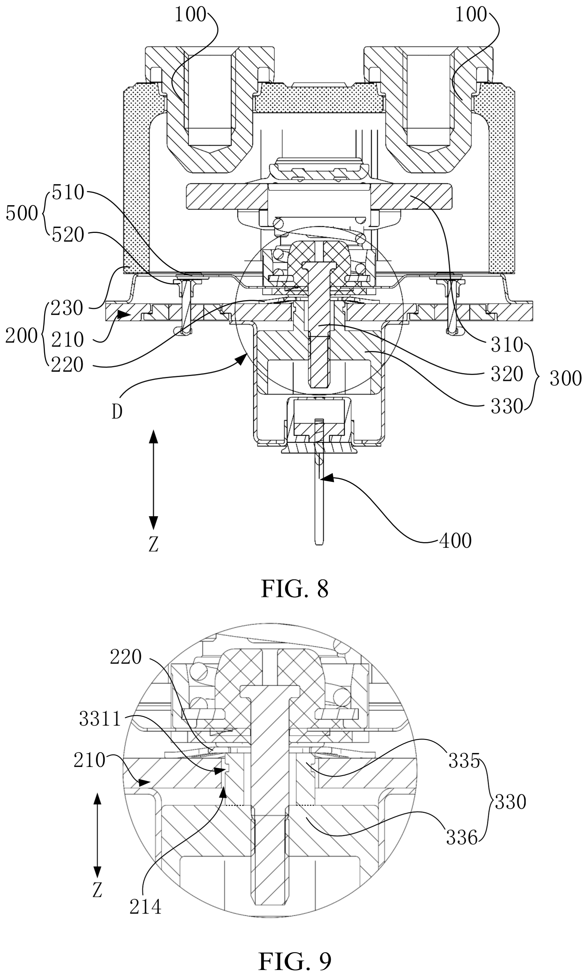

In another embodiment, referring to the structures shown in FIGS. 8 to 11, the fixed assembly 200 includes a support plate 210 and an engaging member 220. The support plate 210 is provided with a second through-hole 214. The engaging member 220 is fixed to the support plate 210 and located outside the second through-hole 214, when the movable assembly 300 is in the actuated state, the engaging member 220 is engaged with the movable assembly 300 to lock the position of the movable assembly 300 in the actuated state; the engaging member and the movable assembly can cooperate to form a locking structure. The locking structure in this embodiment may be understood as a mechanical self-locking structure.

It should be noted that in this embodiment, at least a portion of the engaging member 220 fixed outside the second through-hole 214 of the support plate 210 is used for engaging with the movable assembly 300 to lock the position of the movable rod in the actuated state. When the position of the movable assembly 300 is locked by the engaging member 220, the stationary contact member 100 and the movable contact member 310 in the movable assembly 300 can maintain continuous and effective contact, so as to resist the short-circuit electric repulsive force generated between the movable contact member 310 and the stationary contact member 100 when they are in contact, and keep the movable contact member 310 and the stationary contact member 100 closed continuously to achieve the circuit discharge function.

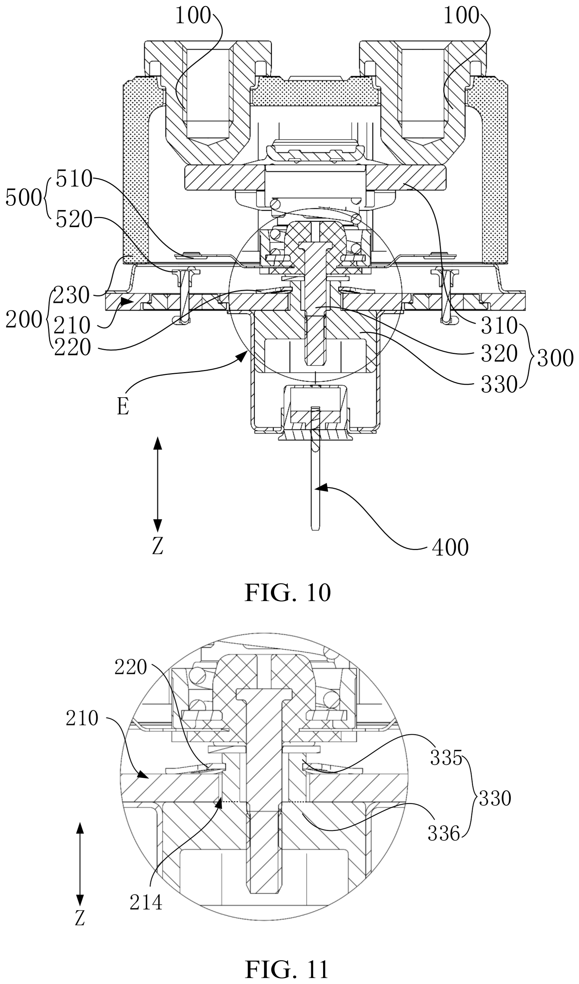

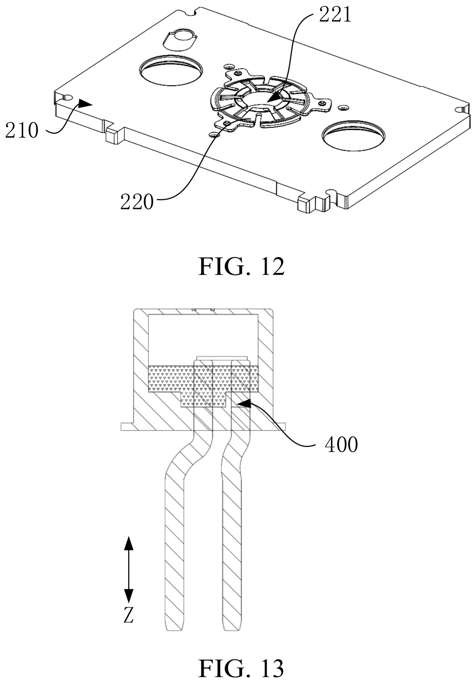

In a specific embodiment, as shown in FIG. 11, the engaging member 220 is fixed to a side of the support plate 210 facing the stationary contact member 100; the engaging member 220 is provided with a third through-hole 221 as shown in FIG. 12, an aperture of the third through-hole 221 is smaller than that of the second through-hole 214, and a vertical projection of the third through-hole 221 on the support plate 210 is located in the second through-hole 214. The movable assembly 300 penetrates the support plate 210 through the second through-hole 214 and the third through-hole 221. The movable assembly 300 includes a movable rod capable of moving relative to the fixed assembly 200 along the first direction, as shown in FIG. 9, the movable rod includes a fifth section 335, a groove 3311 is disposed on the peripheral side surface of the fifth section 335, when the movable assembly 300 is in the initial state, the engaging member 220 is located outside the groove 3311; when the movable assembly 300 is in the actuated state, at least a portion of the engaging member 220 is placed within the groove 3311.

It should be noted that when the actuator 400 pushes the movable rod to move, the groove 3311 on the fifth section 335 moves from an inside of the second through-hole 214 to a side of the support plate 210 facing the stationary contact member 100. During the movement of the groove 3311, the movable rod impacts the engaging member 220 to deform it, so that at least a portion of the engaging member 220 is placed into the groove 3311 to lock the position of the movable rod in the actuated state along the first direction. After the position of the movable rod in the first direction is locked by the engaging member 220, the stationary contact member 100 and the movable contact member 310 in the movable assembly 300 can maintain continuous and effective contact, so as to resist the short-circuit electric repulsive force generated between the movable contact member 310 and the stationary contact member 100 when they are in contact, and keep the movable contact member 310 and the stationary contact member 100 closed continuously to achieve the circuit discharge function.

As shown in FIG. 12, the inner wall surface of the engaging member 220 forming the third through-hole 221 is provided with a plurality of interrupted notches, so as to facilitate embedding the engaging member 220 into the groove 3311, reduce the triggering difficulty of the locking structure, and enable the protection circuit to function stably and effectively.

In one embodiment, referring to the structures shown in FIGS. 8 to 11, the movable rod further includes a sixth section 336, along the first direction, the sixth section 336 is located on a side of the fifth section 335 facing away from the stationary contact member 100; in a plane perpendicular to the first direction, a cross-sectional dimension of the sixth section 336 is larger than the cross-sectional dimension of the fifth section 335. The sixth section 336 and the fifth section 335 form a stepped structure, and the stepped structure has a stepped surface, when the movable assembly 300 is in the actuated state, the stepped surface abuts against the side surface of the main body 211 of the support plate 210 facing away from the stationary contact member 100.

It should be noted that the stepped surface on the surface of the sixth section 336 can limit the maximum moving distance of the movable rod along the first direction, prevent the movable rod from excessive movement when switching from the initial state to the actuated state and avoid damaging the stationary contact member 100, thereby improving the structural performance of the protection device.

Similarly, when the movable assembly 300 is arranged, the movable rod may adopt various structural forms, at least one of the following structural forms.

In a specific embodiment, continue to refer to the structures shown in FIGS. 8 to 11, the movable rod is a movable iron core 330; the movable assembly 300 further includes a push rod 320, the push rod 320 follows the movable rod, and the movable contact member 310 follows the push rod 320.

In another specific embodiment, the movable rod is a movable iron core 330, and the movable contact member 310 follows the movable rod. It should be noted that the movable iron core 330 in the embodiments of the present disclosure is equivalent to integrating the movable iron core 330 and the push rod 320 in FIGS. 8 to 11 into an integrated structure to be triggered by the actuator 400. It should be noted that the structural arrangement in this specific embodiment reduces the number of structural components, simplifies the structure of the protection device, and lowers the assembly difficulty.

It should be noted that in the embodiments of the present disclosure, the engaging member 220 and the movable rod are used to cooperate to form a locking structure. Therefore, the position of the engaging member 220 needs to be fixed to prevent the engaging member 220 from failing to effectively limit the movable rod. In one specific embodiment, the engaging member 220 is welded to the surface of the support plate 210 to improve the firmness degree between the engaging member 220 and the support plate 210, thereby enhancing the locking effect of the locking structure, so that the stationary contact member 100 and the movable contact member 310 in the movable assembly 300 can maintain continuous and effective contact, so as to resist the short-circuit electric repulsive force generated between the movable contact member 310 and the stationary contact member 100 when they are in contact, and keep the movable contact member 310 and the stationary contact member 100 closed continuously to achieve the circuit discharge function.

Certainly, the engaging member 220 and the support plate 210 may adopt other fixed forms as required, such as clamping, riveting, etc., which will not be described in detail.

In one specific embodiment, the engaging member 220 is a metal sheet to facilitate the welding operation between the engaging member 220 and the support plate 210.

In one embodiment, referring to the structures shown in FIGS. 1 to 3, 6 and 8, the fixed assembly 200 further includes an insulating cover 230, the insulating cover 230 is connected with the support plate 210 to form an accommodating cavity, to make the stationary contact member 100 and the movable contact member 310 contact with each other in the accommodating cavity.

It should be noted that the insulating cover 230 may be a high-strength plastic cover (as shown in FIG. 6) or a ceramic cover (as shown in FIGS. 1 to 3). The material of the insulating cover 230 may be specifically selected according to requirements, which will not be described here.

Referring to the structures shown in FIGS. 1 to 3, and 6 again, it should be noted that a part of the stationary contact member 100 protrudes from the insulating cover 230 to form a leading-out terminal. When the insulating cover 230 has different materials, a structure of the stationary contact member 100 and a leading-out form from the insulating cover 230 may be different. The stationary contact member 100 and the insulating cover 230 may adopt fixing processes such as screwing, riveting, hot pressing or welding.

In one embodiment, referring to the structure shown in FIG. 13 in conjunction with FIGS. 1 to 3, the actuator 400 is located on a side of the movable assembly 300 facing away from the stationary contact member 100. As an example, the actuator 400 may drive the movable assembly 300 to move along the first direction.

In one embodiment, the actuator 400 includes an igniter.

It should be noted that the igniter may be selected to be equipped with a filler and a piston or not according to energy requirements. Specifically, the igniter is provided the filler, and the filler may be ignited to generate gas; the igniter pushes the movable assembly 300 by means of the gas; alternatively, a filler and a piston rod are provided in the igniter, and the filler may be ignited to generate gas; the piston rod is located within a diffusion space of the gas and can be pushed by the gas to move along the first direction; the igniter pushes the movable assembly 300 by means of the piston rod.

It should be noted that when the actuator 400 is an igniter, the igniter is ignited when the control module of the battery system triggers the actuator 400.

When the actuator 400 is arranged, the actuator 400 may also achieve a sealing function. Specifically, the actuator 400 can effectively seal the movable assembly 300. The actuator 400 may be fixed on the support plate 210 through a metal shell, or may be fixed on the support plate 210 by using a high-strength plastic guide frame. By being connected in parallel with the main circuit of the battery system, it is protected by the control module when the main circuit is short-circuited.

It should be understood that fixing processes such as screwing and welding can be adopted between the actuator 400 and the support plate 210, which will not be described in detail.

In one embodiment, continue to refer to the structures shown in FIGS. 2 and 3, the protection device provided by the embodiment of the present disclosure further includes a micro switch 500, which realizes the detection of the contact and separation of the movable contact member 310 and the stationary contact member 100, performs logic monitoring on the action of the protection device, and ensures the action reliability of the protection device. The micro switch 500 includes an auxiliary movable contact member 510 and an auxiliary stationary contact member 520, the auxiliary movable contact member 510 follows the movable assembly 300, and the auxiliary stationary contact member 520 is fixed relative to the fixed assembly 200. For example, the auxiliary stationary contact member 520 is fixed relative to the support plate 210.

It should be noted that the micro switch 500 may be in a normally closed state or a normally open state. When the movable assembly 300 is in the initial state, a conductive connection between the auxiliary movable contact member 510 and the auxiliary stationary contact member 520 exists; when the movable assembly 300 is in the actuated state, no conductive connection between the auxiliary movable contact member 510 and the auxiliary stationary contact member 520 exists. Alternatively, when the movable assembly 300 is in the initial state, no conductive connection between the auxiliary movable contact member 510 and the auxiliary stationary contact member 520 exists; when the movable assembly 300 is in the actuated state, a conductive connection between the auxiliary movable contact member 510 and the auxiliary stationary contact member 520 exists.

It should be understood that the auxiliary movable contact member 510 and the auxiliary stationary contact member 520 may be conducted through contacting, or may be conducted through other structural components, which will not be described here. When the auxiliary movable contact member 510 and the auxiliary stationary contact member 520 are conducted through contacting, " no conductive connection between the auxiliary movable contact member 510 and the auxiliary stationary contact member 520 exists" means "the auxiliary movable contact member 510 is not in contact with the auxiliary stationary contact member 520", which can be understood as a gap between them is greater than 0.

As an example, if the auxiliary movable contact member 510 and the auxiliary stationary contact member 520 are in a normally open state, when the movable assembly 300 is in the initial state and the movable contact member 310 is not in contact with the stationary contact member 100, the auxiliary movable contact member 510 is also not in contact with the auxiliary stationary contact member 520. During the process that the movable assembly 300 is switched from the initial state to the actuated state, the movable contact member 310 moves along the first direction, and the auxiliary movable contact member 510 moves following the movable contact member 310. When the movable assembly 300 is in the actuated state, the movable contact member 310 is in contact with the stationary contact member 100, and the auxiliary movable contact member 510 is in contact with the auxiliary stationary contact member 520.

As an example, if the auxiliary movable contact member 510 and the auxiliary stationary contact member 520 are in a normally closed state, when the movable assembly 300 is in the initial state and the movable contact member 310 is not in contact with the stationary contact member 100, the auxiliary movable contact member 510 is in contact with the auxiliary stationary contact member 520. During the process that the movable assembly 300 is switched from the initial state to the actuated state, the movable contact member 310 moves along the first direction, and the auxiliary movable contact member 510 moves following the movable contact member 310. When the movable assembly 300 is in the actuated state, the movable contact member 310 is in contact with the stationary contact member 100, and the auxiliary movable contact member 510 is out of contact with the auxiliary stationary contact member 520.

In addition, the position of the micro switch 500 is not limited to that shown in the accompanying drawings of the present disclosure, but may also be at other positions as required, which will not be described in detail.

In one embodiment, referring to the structure shown in FIG. 1, the protection device further includes a temperature sensor 600, which is located adjacent to the stationary contact member 100 and used for monitoring the temperature of the stationary contact member 100. As shown in FIG. 1, the temperature sensor 600 is arranged on the outer side of the insulating cover 230 at a position close to the leading-out terminal of the stationary contact member 100. The temperature sensor 600 is connected with the battery system to realize real-time monitoring of the temperature rise of the protection device and ensure the safety performance of the protection device.

It should be noted that the temperature sensor 600 may be arranged at other positions as required, which will not be described in detail.

In one embodiment, the protection device further includes an elastic assembly, and the movable rod pushes the movable contact member 310 to act along the first direction by means of the elastic assembly. Specifically, the movable rod pushes the movable contact member 310 through the elastic assembly, so that the movable assembly 300 is switched from the initial state to the actuated state, providing pressure for the movement of the movable rod.

In one specific embodiment, the elastic assembly includes a spring or a leaf spring.

It should be noted that: it can be understood that the various embodiments/implementations provided by the present disclosure can be combined with each other without contradiction, and no examples are given here one by one.

In the embodiments of the present disclosure, the terms "first", "second" and "third" are used for descriptive purposes only, and shall not be construed as indicating or implying relative importance; the term "a plurality of" refers to two or more, unless otherwise clearly defined. The terms "mounted", "joined", "connected" and "fixed" shall be understood in a broad sense. For example, "connected" may be a fixed connection, a detachable connection, or an integral connection; "joined" may be a direct joined or an indirect joined through an intermediate medium. For those skilled in the art, the specific meanings of the above terms in the embodiments of the present disclosure can be understood according to specific circumstances.

In the description of the embodiments of the present disclosure, it should be understood that the terms such as "upper", "lower", "left", "right", "front" and "rear" indicating orientations or positional relationships are based on the orientations or positional relationships shown in the accompanying drawings, which are only for the convenience of describing the embodiments of the present disclosure and simplifying the description, rather than indicating or implying that the referred device or unit must have a specific orientation, be constructed and operated in a specific orientation, and thus shall not be construed as limiting the embodiments of the present disclosure.

In the description of this specification, the descriptions of the terms "one embodiment", "some embodiments", "specific embodiment" and the like mean that the specific features, structures, materials or characteristics described in conjunction with the embodiment or example are included in at least one embodiment or example of the embodiments of the present disclosure. In this specification, the schematic representations of the above terms do not necessarily refer to the same embodiment or example. Moreover, the described specific features, structures, materials or characteristics may be combined in any suitable manner in any one or more embodiments or examples.

The above embodiments are only preferred embodiments of the present disclosure, and are not intended to limit the embodiments of the present disclosure. For those skilled in the art, various modifications and changes may be made to the embodiments of the present disclosure.

## Claims

1. A protection device, comprising: a stationary contact member (100), a fixed assembly (200), a movable assembly (300) and an actuator (400),
wherein the movable assembly (300) is movable relative to the fixed assembly (200), and the movable assembly (300) comprises a movable contact member (310); the movable assembly (300) has an initial state and an actuated state, when the movable assembly (300) is in the initial state, no conductive connection between the movable contact member (310) and the stationary contact member (100) exists; when the movable assembly (300) is in the actuated state, a conductive connection between the movable contact member (310) and the stationary contact member (100) exists;
the actuator (400) is fixed to the fixed assembly (200), and the actuator (400) is capable of being triggered to switch the movable assembly (300) from the initial state to the actuated state.

2. The protection device according to claim 1, wherein the movable assembly (300) and the fixed assembly (200) cooperate to form a locking structure, and the locking structure is configured to lock a position of the movable assembly (300) in the actuated state.

3. The protection device according to claim 2, wherein the fixed assembly (200) is provided with a first through-hole (213), and the movable assembly (300) penetrates the fixed assembly (200) through the first through-hole (213); when the movable assembly (300) is in the actuated state, at least a portion of the movable assembly (300) is engaged within the first through-hole (213) to lock the position of the movable assembly (300) in the actuated state; the movable assembly (300) and the first through-hole (213) cooperate to form the locking structure,
optionally wherein the fixed assembly (200) comprises a support plate (210), and the support plate (210) is provided with the first through-hole (213);
the movable assembly (300) comprises a movable rod capable of moving relative to the fixed assembly (200) along a first direction, the movable rod comprises a first section (331) and a second section (332), along the first direction, the first section (331) is located on a side of the second section (332) facing the stationary contact member (100); in a plane perpendicular to the first direction, a cross-sectional dimension of the first section (331) is smaller than a dimension of the first through-hole (213), and a cross-sectional dimension of the second section (332) is larger than a cross-sectional dimension of the first section (331); when the movable assembly (300) is in the initial state, at least a portion of the first section (331) is placed within the first through-hole (213), and the second section (332) is located outside the first through-hole (213); when the movable assembly (300) is in the actuated state, at least a portion of the second section (332) is engaged within the first through-hole (213) to lock the position of the movable assembly (300) in the actuated state.

4. The protection device according to claim 3, wherein the movable rod further includes a third section (333), and the first section (331) is transitionally connected with the second section (332) through the third section (333),
and/or wherein the support plate (210) includes a main body (211) and a limiting protrusion (212), the first through-hole (213) is disposed on the main body (211), and the limiting protrusion (212) protrudes from an inner wall surface of the first through-hole (213);
a groove (3311) is disposed on a peripheral side surface of the first section (331), when the movable assembly (300) is in the initial state, at least a portion of the limiting protrusion (212) is located within the groove (3311); when the movable assembly (300) is in the actuated state, the limiting protrusion (212) detaches from the main body (211).

5. The protection device according to claim 4, wherein the movable rod further includes a fourth section (334), along the first direction, the fourth section (334) is located on a side of the second section (332) facing away from the stationary contact member (100); in a plane perpendicular to the first direction, a cross-sectional dimension of the fourth section (334) is larger than a cross-sectional dimension of the second section (332); the fourth section (334) and the second section (332) form a stepped structure, and the stepped structure has a stepped surface; when the movable assembly (300) is in the actuated state, the second section (332) is completely placed within the first through-hole (213), and the stepped surface abuts against a side surface of the main body (211) of the support plate (210) facing away from the stationary contact member (100).

6. The protection device according to claim 2, wherein the fixed assembly (200) comprises a support plate (210) and an engaging member (220), the support plate (210) is provided with a second through-hole (214); the engaging member (220) is fixed to the support plate (210) and located outside the second through-hole (214), when the movable assembly (300) is in the actuated state, the engaging member (220) is engaged with the movable assembly (300) to lock the position of the movable assembly (300) in the actuated state; the engaging member (220) and the movable assembly (300) cooperate to form the locking structure,
optionally wherein the engaging member (220) is fixed to a side of the support plate (210) facing the stationary contact member (100); the engaging member (220) is provided with a third through-hole (221), an aperture of the third through-hole (221) is smaller than that of the second through-hole (214), and a vertical projection of the third through-hole (221) on the support plate (210) is located within the second through-hole (214); the movable assembly (300) penetrates the support plate (210) through the second through-hole (214) and the third through-hole (221);
the movable assembly (300) comprises a movable rod capable of moving relative to the fixed assembly (200) along a first direction, the movable rod comprises a fifth section (335), a groove (3311) is disposed on a peripheral side surface of the fifth section (335), when the movable assembly (300) is in the initial state, the engaging member (220) is located outside the groove (3311); when the movable assembly (300) is in the actuated state, at least a portion of the engaging member (220) is located within the groove (3311),
optionally wherein the engaging member (220) is welded to a surface of the support plate (210),
optionally wherein the engaging member (220) is a metal sheet.

7. The protection device according to claim 6, wherein the movable rod further comprises a sixth section (336), along the first direction, the sixth section (336) is located on a side of the fifth section (335) facing away from the stationary contact member (100); in a plane perpendicular to the first direction, a cross-sectional dimension of the sixth section (336) is larger than a cross-sectional dimension of the fifth section (335); the sixth section (336) and the fifth section (335) form a stepped structure, and the stepped structure has a stepped surface, when the movable assembly (300) is in the actuated state, the stepped surface abuts against a side surface of the main body (211) of the support plate (210) facing away from the stationary contact member (100).

8. The protection device according to claim 3, 4, or 6, wherein the movable rod is a movable iron core (330); the movable assembly (300) further comprises a push rod (320), the push rod (320) follows the movable rod, and the movable contact member (310) follows the push rod(320); or,
the movable rod is a movable iron core (330), and the movable contact member (310) follows the movable rod.

9. The protection device according to claim 1, 2, 3, 4or 6, wherein a number of the stationary contact members (100) is two, and two ends of the movable contact member (310) is capable of being contacted with and being out of contact with the two stationary contact members (100) respectively.

10. The protection device according to claim 3, 4 or 6, wherein the fixed assembly (200) further comprises an insulating cover (230), the insulating cover (230) is connected with the support plate (210) to form an accommodating cavity, and the stationary contact member (100) and the movable contact member (310) are contacted with each other within the accommodating cavity.

11. The protection device according to claim 1, 2, 3, 4 or 6, wherein the movable contact member (310) is located on a side of the stationary contact member (100), and the actuator (400) is located on a side of the movable assembly (300) facing away from the stationary contact member (100).

12. The protection device according to claim 1, 2, 3, 4 or 6, wherein the actuator (400) includes an igniter,
optionally wherein a filler is provided in the igniter, and the filler is capable of being ignited to generate gas; the igniter pushes the movable assembly (300) by means of the gas; or,
a filler and a piston rod are provided in the igniter, and the filler is capable of being ignited to generate gas; the piston rod is located in a diffusion space of the gas and can be pushed by the gas; the igniter pushes the movable assembly (300) by means of the piston rod.

13. The protection device according to claim 1, 2, 3, 4 or 6, wherein the protection device further comprises a temperature sensor (600), and the temperature sensor (600) is located adjacent to the stationary contact member (100) for monitoring the temperature of the stationary contact member (100),
and/or wherein the protection device further comprises a micro switch (500), the micro switch (500) comprises an auxiliary movable contact member (510) and an auxiliary stationary contact member (520), the auxiliary movable contact member (510) follows the movable assembly (300), and the auxiliary stationary contact member (520) is fixed relative to the fixed assembly (200);
when the movable assembly (300) is in the initial state, a conductive connection between the auxiliary movable contact member (310) and the auxiliary stationary contact member (100) exists; when the movable assembly (300) is in the actuated state, no conductive connection between the auxiliary movable contact member (310) and the auxiliary stationary contact member (100) exists; or,
when the movable assembly (300) is in the initial state, no conductive connection between the auxiliary movable contact member (510) and the auxiliary stationary contact member (520) exists; when the movable assembly (300) is in the actuated state, a conductive connection between the auxiliary movable contact member (510) and the auxiliary stationary contact member (520) exists.

14. The protection device according to claim 3, 4, or 6, wherein the protection device further comprises an elastic assembly, and the movable rod pushes the movable contact member (310) to act in the first direction by means of the elastic assembly,
optionally wherein the elastic assembly comprises a spring or a leaf spring.

15. A protection circuit, comprising the protection device according to any one of claims 1 to 14.

16. A battery system, comprising the protection device according to any one of claims 1 to 14.

17. A battery system, comprising the protection circuit according to claim 15,
optionally further comprising a main circuit, the protection circuit is connected in parallel with the main circuit and is capable of allowing residual current remaining in the main circuit in an interrupted state to pass through.
